# EUROPEAN PATENT APPLICATION

(11) **EP 4 357 473 A1**
(43) Date of publication of application: **24.04.2024**
(21) Application number: 22823905.9
(22) Date of filing: 25.04.2022
(51) Int. Cl.: C22C 29/08, C22C 29/02, C22C 1/05, B22F 9/04, C22C 30/00, C22C 30/02, C03B 23/00, C03C 19/00, B29C 33/38, G02B 3/00

(54) **WC-BASED HARD ALLOY AND APPLICATION THEREOF**

(30) Priority: 18.06.2021 CN 202110675250
(71) Applicant: Xiamen Tungsten Co., Ltd., Huli District Xiamen Fujian 361006 (CN); Xiamen Golden Egret Special Alloy Co., Ltd., Xiamen, Fujian 361006 (CN)
(72) Inventor: LIU, Chao, Xiamen, Fujian 361006 (CN); WEN, Xiao, Xiamen, Fujian 361006 (CN); LIU, Bin, Xiamen, Fujian 361006 (CN); FAN, Chaoying, Xiamen, Fujian 361006 (CN); CAI, Xiaokang, Xiamen, Fujian 361006 (CN); ZHENG, Wenqing, Xiamen, Fujian 361006 (CN); WU, Songyi, Xiamen, Fujian 361006 (CN)
(74) Representative: Dundas, Gavin Turner
(86) International application number: PCT/CN2022/088923
(87) International publication number: WO 2022/262420

(57) **Abstract**

The present invention provides a WC-based hard alloy. The molecular formula of the WC-based hard alloy is T-WC-HEA, wherein T is at least one of a carbide, an oxide or a boride, and HEA is a high-entropy alloy. HEA includes selected from at least five elements of Al, Cu, Nb, Ti, Zr, Ge, Si, V, Ta, Cr, Mn, Ce, Mo, W, or Hf. T includes element B. In the WC-based hard alloy, the content of HEA is 0.5 wt%-5 wt%, the content of T is 35 wt% or less, and the balance is WC and inevitable impurities. The content of B is 0.1 wt%-3 wt%. The melting point of HEA is 1850°C or less. The atomic ratio of each element in HEA is 0.33-1 as measured by an energy dispersive spectrometer. The WC-based hard alloy in a novel alloy system has excellent strength and toughness, relatively high thermal conductivity and thermal stability, high density, and can meet optical-grade surface requirements by machining.

## Description

### TECHNICAL FIELD

The present invention relates to a hard alloy, and particularly to a WC-based hard alloy.

### BACKGROUND

A hard alloy has the advantages of high hardness, good abrasion resistance, good corrosion resistance, small thermal expansion coefficient and so on, and is widely used in precision molds and parts with good abrasion resistance and corrosion resistance for forming optical glass, stretching metal or the like. A hard alloy mold has a long service life, which is ten times or even hundreds of times than that of a steel mold. Moreover, an article made of a hard alloy has very high surface quality, and the parts such as glass lenses made by using the article can meet the requirements of optical surface quality. However, as one typical material difficult to machine, a hard alloy has to meet higher requirements of performance when a hard alloy mold is to be machined, for forming micro-prisms, spherical lenses or the like with the optical surface quality.

A WC-based hard alloy is a kind of hard brittle material, and the unwanted material is removed by brittle fracture in conventional cut machining. There is a big challenge at present in the field of hard alloys on how to realize ductile-regime cutting of a hard alloy, allowing the hard alloy material to be removed by plastic deformation and thus to obtain a good machining surface quality.

### SUMMARY

An object of the present invention is to overcome the shortcomings of the prior art, providing a WC-based hard alloy in a new alloy system. The WC-based hard alloy introduces a high-entropy alloy and makes full use of element B, so that the alloy overall has excellent strength and toughness, high thermal conductivity and thermal stability, as well as high density, which can meet the requirements of optical grade surface through machining.

The technical solutions provided in the present invention are as follows.

A WC-based hard alloy has a molecular formula of T-WC-HEA, wherein T is at least one of a carbide, an oxide, or a boride; HEA is a high-entropy alloy and includes at least five elements selected from the group consisting of Al, Cu, Nb, Ti, Zr, Ge, Si, V, Ta, Cr, Mn, Ce, Mo, W, and Hf; and T includes element B; in the WC-based hard alloy, a content of HEA is 0.5 wt%-5 wt%, a content of T is 35 wt% or less, and the balance is WC and inevitable impurities; a content of B is 0.1 wt%-3 wt%; and an atomic ratio of each element in HEA is 0.33-1 as measured by an energy dispersive spectrometer (EDS).

The melting point of HEA is 1850 °C or less, and preferably is 1700 °C or less.

According to long-term research by the inventors, HEA formed by selection and combination of five or more specific elements can improve wetting with WC grains and toughness, and inhibit abnormal growth of WC grains to a certain extent during sintering, rather than increase the hardness of the WC-based hard alloy. However, it is difficult to form a complete solid solution of WC and HEA in the WC-HEA system, resulting in poor oxidation resistance at high temperature. In addition, the sintering is a competition between nucleation and growth, and HEA grains are prone to grow quickly to form coarse grains, which can deteriorate the mechanical properties of the alloy. It is found in tests that B can play a synergistic role with HEA in the alloy system, and metal borides are formed *in situ* from B and free metal elements deposited on the surface of HEA. On the one hand, the metal borides can reduce or eliminate crystal defects of the alloy system and thus improve integrity of the alloy phase structure and oxidation resistance at high temperature, and on the other hand, the metal borides can act as an inhibitor for HEA grains and thus ameliorate grain size.

HEA and B can synergistically affect the alloy system, so that the resultant WC-based hard alloy has more advantages over a traditional WC-Co hard alloy in strength, toughness and high temperature oxidation resistance. Compared with a conventional binderless hard alloy, such as WC-Mo₂C-SiC or WC-TiC-TaC, the WC-based hard alloy of the present invention may have no advantage in hardness, but can significantly increase strength and toughness. It is found that the addition of HEA is more beneficial to increase thermal conductivity and reduce thermal expansion of the alloy, thereby greatly improving machining performances at high temperature, especially for optical mold base materials with higher requirements for forming precision.

In a recommended embodiment, T is preferably at least two selected from the group consisting of Al₄C₃, HfC, TiC, Cr₃C₂, VC, ZrC, NbC, TaC, SiC, Mn₃C, MoC, CuC, Mg₂C₃, W₂C, CeO₂, La₂O₃, MgO, ZrO₂, Al₂O₃, ZrB₂, CrB₂, TiB₂, and MnB₂.

In a recommended embodiment, B is preferably present in the form of a transition metal boride, such as ZrB₂, CrB₂, TiB₂, or MnB₂.

In a recommended embodiment, the atomic ratio of each element in HEA is 0.5-1 as measured by an energy dispersive spectrometer; and the maximum difference between atomic radii of elements in HEA is not larger than 0.33, more preferably not larger than 0.25, and most preferably not larger than 0.17. The atomic ratio and the difference between atomic radii determine to some extent the composition of the high-entropy alloy, and affect the structure characteristics of the solid solution in the hard alloy, thereby affecting machining performances. When the atomic radius difference of the elements in HEA is too large, some metal atoms would be extruded and form free metals during the formation of HEA, so that oxidation resistance of the alloy is reduced. However, it does not mean that the atomic radii of the elements the closer the better. In the case that the atomic radii of the elements are close to each other, there is relatively more face-centered cubic phase in the alloy, resulting in hardness of the alloy being slightly poor and performances of friction and abrasion also being affected.

In a recommended embodiment, HEA is preferably at least one selected from the group consisting of Al_{0.4}Hf_{0.6}NbTaTiZr, AlMo_{0.5}NbTa_{0.5}TiZr, AlNbTaTiV, AlNb_{1.5}Ta_{0.5}Ti_{1.5}Zr_{0.5}, AlCr₂Mo₂Nb₂Ti₂Zr, HfMoNbTiZr, HfNbTaTiZr, HfNbTiVZr, CrNbTiVZr, CrMo_{0.5}NbTa_{0.5}TiZr, TiZrHfNbCr, TiNbMoTaW, TiVNbMoTaW, HfMoTaTiZr, and HfMoNbTaTiZr. There is one metal element with a slightly larger atomic radius and the other elements with similar atomic radii in each of the above molecular formula, which is beneficial during the formation of HEA for access of the metal element with the slightly larger atomic radius into the lattice to promote lattice distortion, i.e., transforming from face-centered cubic phase to body-centered cubic phase. Moreover, during the process of sintering, the selected elements are readily to combine with each other and form an ordered solid solution. In addition, the selected HEA is more beneficial to improve thermal conductivity and thermal stability of the WC-based hard alloy.

In a recommended embodiment, a content of BCC phase solid solution in HEA is preferably 80% or more. HEA, which is mainly BCC phase as a whole, is more suitable for the characteristics of high hardness of the WC-based hard alloy, avoiding generation of cracks and holes during machining.

In a recommended embodiment, a content of FCC phase solid solution in HEA is preferably 10% or more. When HEA contains a certain FCC phase, the overall material would be relatively soft and prone to plastic deformation during machining, avoiding generation of surface adhesion and fine abrasive particles, thereby improving machining performances of the WC-based hard alloy.

In a recommended embodiment, a content of B in the WC-based hard alloy is 1.5 wt%-3 wt%, and the content of HEA is 2.5 wt%-5 wt%. It is found in tests that there is a certain correlation between the contents of B and HEA. If the contents of B and HEA are outside the set range, there may be too much borides, boron carbides or the like in the hard alloy, so that it is difficult to sintering and thus toughness is decreased.

In a recommended embodiment, the content of B in the WC-based hard alloy is 0.1 wt%-1.5 wt%, and the content of HEA is 0.5 wt%-2.5 wt%. It is found in tests that there is a certain correlation between the contents of B and HEA. If the contents of B and HEA are outside the set range, it may affect the formation of stable phase structure of HEA or lead to increasing the content of free metal in the hard alloy and reducing oxidation resistance.

In a recommended embodiment, the molecular formula of the WC-based hard alloy is ZrC-ZrB₂-WC-AlNb_{1.5}Ta_{0.5}Ti_{1.5}Zr_{0.5}.

In a recommended embodiment, in the WC-based hard alloy, B contained in T and the elements combining with B to form compounds are all derived from HEA. In this way, the WC-based hard alloy has the advantages of high utilization rate of raw materials, uniform microstructure and low cost in a certain extent.

In a recommended embodiment, the average grain size of WC in the WC-based hard alloy is 100 nm-400 nm; the WC-base hard alloy has high density; and thermal conductivity of the WC-based hard alloy at normal temperature is 72W/m·K or more.

The wt% in the present invention is referred to weight percentage.

It should be noted that each numerical range disclosed in the present invention includes all point values within this range.

The present invention also provides a mold used for optical glass, which is made of the above WC-based hard alloy. The material of optical glass includes silicon dioxide, resin material, or zinc selenide.

Without any specific limitation, the resin material of the present invention can be, for example, a polyester resin, a polyamide resin, a polyarylene sulfide resin, a polyimide resin, a polyether ether ketone resin, etc., and may also include polymethyl methacrylate, polystyrene, polycarbonate, polydiallyl diglycol carbonate or the like.

The WC-based hard alloy in the new alloy system of the present invention can be used to form a mold for optical glass, and has excellent machining performances. Optical glass molding technology refers to a process that a certain pressure is applied to a mold at high temperature, so that the shape of a microlens array on a mold surface is copied to a glass surface softened by heat, and then an ideal glass microlens array is obtained after annealing, cooling and curing. The WC-based hard alloy of the present invention has better machining performances than the existing hard alloys, including: thermal conductivity of ≥72 W/m K, density of ≥12 g·cm⁻³, hardness HRA of ≥70, fracture toughness of ≥10 MPa·M^{1/2}, bending strength of ≥1600 N·mm⁻², and oxidation weight gain of ≤1.16 mg·cm⁻². It is contemplated that the WC-based hard alloy can achieve effective distribution with good material consistency and no internal defects due to introduction of HEA and synergistic effect of B. For this reason, after machining, the WC-based hard alloy has surface roughness Ra of ≤10 nm. The increase of its own thermal conductivity also results in rapid heat conduction during annealing under high temperature compression and decompression, and extremely small thermal expansion amount of the mold, with shape variable of the mold before and after molding to be nearly zero.

### DETAILED DESCRIPTION

The present invention will now be described in detail with reference to Examples.

XRD: performing X-ray diffraction phase analysis on D8 DISCOVER X-ray diffractometer from Bruck, Germany. Equipment specifications: using Cu as radiation source, graphite monochromator, operating voltage 40 kV, current 250 mA, self-rotating targets, scanning rate 8°/min, and selecting diffraction angle range 2θ = 5-90°.

Determination of composition: using inductively coupled plasma emission spectrometer to test non-gaseous element impurity composition.

Morphology analysis: using scanning electron microscope (SEM) and electron backscatter diffraction probe (EBSD) to observe and analyze grain morphology and crystalline phase of the hard alloy.

Hardness test: referring to GB/T 7997-2014, "Hardmetals-Vickers hardness test".

Bending resistance: using CMT5305 microcomputer control universal testing machine to test, and referring to GB/T 3851-2015, "Hardmetals-Determination of transverse rupture strength".

Toughness test: referring to GB/T 33819-2017, "Hardmetals-Palmqvist toughness test".

Thermal conductivity: using LFA457 laser thermal conductivity testing instrument from NETZSCH, Germany, and referring to GB/T 22588-2008.

Density: using AccuPyc II 1340 true density analyzer from Micromeritics, USA to test.

Oxidation resistance: referring to GB/T 13303-1991, "Steels-Determination method of oxidation resistance".

Surface roughness: using shape-from-shading method to test, and referring to GB/T 15056-2017, "Casting surface roughness-Appraising method".

PULVERISETTE 5 planetary ball mill is used for ball-milling in the present invention.

PVSGgr20/20 vacuum sintering furnace from Shimadzu, Agilent 1260 Inifntiy spark plasma sintering furnace, and/or HP20-36 hot isostatic press sintering furnace from Ellinvico are used for sintering in the present invention.

The WC-based hard alloy in the new alloy system of the present invention can be prepared by any method, and there is no special limitation to the preparation method. For example, a preparation method of sintering powder or smelting alloy can be used. However, in order to be more economical, the following processes are preferable for the preparation method, including: preparing raw materials, formulating powder, ball-milling, pressing and sintering. The raw materials include WC powder, elemental powders constituting HEA, and ceramic powders consisting of carbides, oxides, or borides.

There is no special limitation to the above WC powder, which can be appropriately selected as required by those skilled in the art. For example, WC powder with a particle size of 0.1 µm-3 µm can be used.

There is no special limitation to the above elemental powders constituting HEA, which can be appropriately selected as required by those skilled in the art. For example, an elemental powder with a particle size of 0.5 µm or less can be selected and subjected to the processes of vacuum melting, powdering by vacuum gas atomization, screening, etc.

There is no special limitation to the above ceramic powders consisting of carbides, oxides, or borides, which can be appropriately selected as required by those skilled in the art. For example, a powder with a particle size of 0.5 µm-5 µm can be used.

There is no special limitation to the above ball-milling process, which can be dry grinding or wet grinding. However, in order to reduce introduction of C into the alloy, dry ball-milling method is preferable for mixing.

There is no special limitation to the above pressing process, which can be dry pressure forming, cold isostatic forming, or injection molding.

### Example I

The WC-based hard alloy in each Example with the composition as shown in Table 1 is prepared by the following steps of:

### 1) Preparing raw materials

WC powder with an average particle size of 0.1 µm; five metal powders (Al, Nb, Ta, Ti, and Zr) constituting HEA, with particle sizes of 0.5 µm; and ceramic powder consisting of boron carbide, titanium carbide, tantalum carbide, or alumina with a particle size of 0.5 µm are prepared.

### 2) Ball-milling

a) HEA alloy powder is obtained by high energy ball-milling of the elemental powders constituting HEA for 24h under the protection of inert atmosphere, with a ball to powder ratio of 15: 1, a rotating speed of 400r/min, and hard alloy balls used as grinding medium.
b) WC powder and ceramic powder are added and ball-milled for 40h in vacuum, with a ball to powder ratio of 5:1, and a rotating speed of 100r/min.

### 3) Pressing

A green body is obtained by pressing under a pressure of 180 MPa and holding for 120s.

### 4) Sintering

A WC-based hard alloy is obtained by spark plasma sintering the above green body in a sintering furnace for 30min under a vacuum degree of above 10 Pa, a temperature of 1600°C, and a pressure of 60 MPa, and then cooling. The WC-based hard alloy is surface polished by nanoscale diamond paste.

The difference between the WC-based hard alloy in Comparative Example 3 and that in Example 1 as shown in Table 1 lies in that there is no elemental powder constituting HEA in the raw materials of Comparative Example 3.

The difference between the WC-based hard alloy in Comparative Example 4 and that in Example 1 as shown in Table 1 lies in that there is no ceramic powder consisting of carbides, oxides, or borides in the raw materials of Comparative Example 4.

**Table 1. Percentage Compositions of the Hard Alloys in Examples and Comparative Examples**

| No. | Percentage composition of the hard alloy (wt%) | | | | | | | | |
|---|---|---|---|---|---|---|---|---|---|
| | HEA | T | | | | | | | WC |
| | | B | Zr | Ti | Ta | Al | C | O | |
| Example 1 | 5 | 3 | 12.6 | 5 | 0 | 0 | 1.3 | 0 | balance |
| Example 2 | 3 | 2 | 8.4 | 5 | 0 | 0 | 1.3 | 0 | balance |
| Example 3 | 3 | 2 | 8.4 | 5 | 10 | 10 | 5.3 | 0 | balance |
| Example 4 | 2.5 | 1.5 | 6.3 | 5 | 0 | 0 | 1.3 | 0 | balance |
| Example 5 | 1 | 0.5 | 2.1 | 5 | 0 | 0 | 1.3 | 0 | balance |
| Example 6 | 1 | 0.5 | 2.1 | 5 | 5 | 5 | 3.8 | 0 | balance |
| Example 7 | 0.5 | 0.1 | 0.4 | 5 | 0 | 0 | 1.3 | 0 | balance |
| Example 8 | 5 | 0.1 | 12.6 | 5 | 0 | 0 | 1.3 | 0 | balance |
| Example 9 | 0.5 | 3 | 0.4 | 5 | 0 | 0 | 1.3 | 0 | balance |
| Comparative Example 1 | 8 | 3 | 12.6 | 5 | 0 | 0 | 1.3 | 0 | balance |
| Comparative Example 2 | 2.5 | 5 | 21.1 | 5 | 0 | 0 | 1.3 | 0 | balance |
| Comparative Example 3 | 0 | 3 | 12.6 | 5 | 0 | 0 | 1.3 | 0 | balance |
| Comparative Example 4 | 5 | 0 | | | | | | | balance |

The molecular formula of HEA in Example I is determined to be AlNb_{1.5}Ta_{0.5}Ti_{1.5}Zr_{0.5}.

The hard alloy in each Example and Comparative Example is tested for performances and surface roughness Ra, and the results are shown in Table 2.

**Table 2. Results of Performance Tests of the Hard Alloys in Examples and Comparative Examples**

| No. | Thermal conductivity (W/m·K) | Density (g·cm⁻³) | Hardness (HRA) | Fracture toughness (MPa·M^{1/2}) | Flexural strength (N·mm⁻²) | Surface roughness Ra (nm) | Oxidation weight gain (mg·cm⁻²) |
|---|---|---|---|---|---|---|---|
| Example 1 | 77.8 | 12.8 | 71.6 | 16.6 | 1689 | 8.6 | 1.155 |
| Example 2 | 76.2 | 12.6 | 74.8 | 15.2 | 1855 | 5.4 | 1.152 |
| Example 3 | 75.4 | 12.5 | 75.4 | 14.7 | 1904 | 6.3 | 1.151 |
| Example 4 | 75.1 | 12.6 | 76.5 | 12.6 | 2021 | 2.9 | 1.147 |
| Example 5 | 74.2 | 12.5 | 80.2 | 11.6 | 2101 | 5.1 | 1.146 |
| Example 6 | 74.4 | 12.4 | 83.1 | 11.2 | 2178 | 7.2 | 1.145 |
| Example 7 | 73.4 | 12.3 | 83.6 | 10.8 | 2215 | 7.9 | 1.142 |
| Example 8 | 75.3 | 12.5 | 72.8 | 10.5 | 1676 | 10.0 | 1.160 |
| Example 9 | 72.0 | 12.5 | 83.9 | 10.0 | 1680 | 9.5 | 1.158 |
| Comparative Example 1 | 79.7 | 13.1 | 65.5 | 17.5 | 1611 | 12.1 | 1.188 |
| Comparative Example 2 | 69.5 | 12.5 | 91.8 | 7.9 | 2399 | 11.4 | 1.175 |
| Comparative Example 3 | 70.7 | 12.5 | 87.3 | 8.8 | 1645 | 13.4 | 1.211 |
| Comparative Example 4 | 74.5 | 12.6 | 68.3 | 17.1 | 1722 | 10.8 | 1.165 |

In Examples 1-7, the performances of the hard alloy in each Example are as follows. Thermal conductivity is ≥72 W/m·K, density is ≥12 g·cm⁻³, hardness HRA is ≥70, fracture toughness is ≥10 MPa·M^{1/2}, flexural strength is ≥1600 N·mm⁻², oxidation weight gain is ≤1.16 mg·cm⁻², and surface roughness Ra is ≤10nm after surface polish, all of which meet the requirements of an alloy mold for manufacturing optical lens.

Compared with those alloys in Examples 1-7, toughness of the alloy in Example 8 is decreased significantly, and oxidation resistance of the alloy in Example 9 is decreased significantly, resulting from the certain correlation between the contents of B and HEA. When the content of HEA is 2.5 wt%-5 wt%, the optimal matching content of B is 1.5 wt%-3 wt%. When the content of HEA is 0.5 wt%-2.5 wt%, the optimal matching content of B is 0.1 wt%-1.5 wt%. The contents of HEA and B in Examples 8 and 9 do not conform to the above optimal matching contents, and thus synergistic effect of HEA and B in the alloy system could not be fully achieved to further improve the alloy performances.

Compared with the alloy in Example 1, the alloy in Comparative Example 1 apparently could not meet the requirements of a mold used for manufacturing optical lens due to the fact that the content of HEA is higher than 5 wt%, resulting in hardness HRA being lower than 70 and oxidation weight gain being higher than 1.16 mg·cm⁻², and thus the surface roughness Ra of the alloy after polishing being higher than 10 nm.

Compared with the alloy in Example 4, the alloy in Comparative Example 2 apparently could not meet the requirements of a mold used for manufacturing optical lens due to the fact that the content of B is higher than 3 wt%, resulting in fracture toughness being lower than 10 MPa·M^{1/2} and oxidation weight gain being higher than 1.16 mg·cm⁻², and thus the surface roughness Ra of the alloy after polishing being higher than 10 nm.

Compared with the alloy in Example 1, where 5 wt% HEA is added, the alloy in Comparative Example 3 apparently could not meet the requirements of a mold used for manufacturing optical lens due to the fact that the content of HEA is 0, resulting in fracture toughness being lower than 10 MPa·M^{1/2} and oxidation weight gain being higher than 1.16 mg·cm⁻², and thus the surface roughness Ra of the alloy after polishing significantly being higher than 10 nm.

Compared with the alloy in Example 1, the alloy in Comparative Example 4 apparently could not meet the requirements of a mold used for manufacturing optical lens due to the fact that no B is added, resulting in hardness HRA being lower than 70 and oxidation weight gain being higher than 1.16 mg·cm⁻², and thus the surface roughness Ra of the alloy after polishing being higher than 10 nm.

### Example II

The difference between those WC-based hard alloys in Examples 8-12 and that in Example 1 lies in that the composition of HEA powder in raw materials is not exactly the same. The composition of the WC-based hard alloys is shown in Table 3.

**Table 3. Compositions of HEA of the Hard Alloys in Examples**

| No. | Composition of HEA in the hard alloy |
|---|---|
| Example 8 | Al_{0.4}Hf_{0.6}NbTaTiZr |
| Example 9 | HfNbTaTiZr |
| Example 10 | TiVNbMoTaW |
| Example 11 | CrMo_{0.5}NbTa_{0.5}TiZr |
| Example 12 | AlCr₂Mo₂Nb₂Ti₂Zr |

The hard alloy in each example is subjected to performances tests, and the results are shown in Table 4.

**Table 4. Results of Performances Tests of the Hard Alloys in Examples**

| No. | Thermal conductivity (W/m·K) | Density (g·cm⁻³) | Hardness (HRA) | Fracture toughness (MPa·M^{1/2}) | Flexural strength (N·mm⁻²) | Surface roughness Ra (nm) | Oxidation weight gain (mg·cm⁻²) |
|---|---|---|---|---|---|---|---|
| Example 8 | 77.2 | 12.7 | 71.3 | 16.2 | 1681 | 8.8 | 1.156 |
| Example 9 | 77.0 | 12.5 | 70.7 | 16.5 | 1676 | 8.9 | 1.157 |
| Example 10 | 76.5 | 12.5 | 70.4 | 16.6 | 1673 | 9.1 | 1.159 |
| Example 11 | 76.2 | 12.3 | 70.2 | 16.1 | 1670 | 9.4 | 1.160 |
| Example 12 | 77.3 | 12.2 | 71.1 | 16.3 | 1682 | 8.6 | 1.156 |

In Examples 8-12, the performances of each hard alloy, including thermal conductivity, density, hardness, fracture toughness, flexural strength, and oxidation weight gain, could all meet the requirements of the mold used for manufacturing optical lens. Thermal conductivity is ≥72 W/m·K, density is ≥12 g·cm⁻³, hardness HRA is ≥70, fracture toughness is ≥10 MPa·M^{1/2}, flexural strength ≥1600 N·mm⁻², oxidation weight gain ≤ 1.16 mg·cm⁻², and the surface roughness Ra of the alloy after polishing is less than 10 nm.

### Example III

The difference between the WC-based hard alloy in Example 13 and that in Example 1 lies in the sintering process. The sintering process in Example 13 includes: placing a green body in a hot isostatic press sintering furnace for 1.5h under a vacuum degree of higher than 10 Pa, a temperature of 1600 °C, and a pressure of 60 MPa, and then cooling, to obtain a WC-based hard alloy.

The difference between the WC-based hard alloy in Example 14 and that in Example 1 lies in the ball-milling process. The ball-milling process in Example 14 includes: a) high-energy ball-milling the elemental powders constituting HEA for 45h under the protection of inert atmosphere, with a ball to powder ratio of 18: 1, a rotating speed of 500 r/min, and hard alloy balls used as grinding medium; and b) adding and ball-milling WC powder and ceramic powder for 60h in vacuum, with a ball to powder ratio of 5:1, and a rotating speed of 150 r/min.

The difference between the WC-based hard alloy in Example 15 and that in Example 1 lies in that the sintered WC-based hard alloy in Example 15 is further subjected to the annealing process. The annealing process in Example 15 includes: placing the sintered WC-based hard alloy in a hot isostatic press sintering furnace under a vacuum degree of higher than 10 Pa, heating to 200°C and holding for 2h, and then cooling to room temperature. Then the alloy was removed for testing.

The phase compositions of HEA of the hard alloys in Examples 1 and 13-15 are shown in Table 5.

**Table 5. Phase Compositions of HEA of the Hard Alloys in Examples**

| No. | The phase composition of HEA in the hard alloy (%) | | |
|---|---|---|---|
| | BCC | FCC | rests |
| Example 1 | 83.2 | 13.5 | 3.3 |
| Example 13 | 83.8 | 13.6 | 2.6 |
| Example 14 | 84.0 | 13.6 | 2.4 |
| Example 15 | 82.6 | 13.3 | 4.1 |

The hard alloy in each example is subjected to performances tests, and the results are shown in Table 6.

**Table 6. Results of Performance Tests of the Hard Alloys in Examples**

| No. | Thermal conductivity (W/m·K) | Density (g·cm⁻³) | Hardness (HRA) | Fracture toughness (MPa·M^{1/2}) | Flexural strength (N·mm⁻²) | Surface roughness Ra (nm) | Oxidation weight gain (mg·cm⁻²) |
|---|---|---|---|---|---|---|---|
| Example 13 | 78.6 | 13.3 | 71.5 | 17.0 | 1709 | 8.4 | 1.151 |
| Example 14 | 78.7 | 13.4 | 72.1 | 17.3 | 1715 | 8.1 | 1.148 |
| Example 15 | 77.9 | 12.4 | 70.1 | 17.7 | 1677 | 8.9 | 1.130 |

In Examples 13-15, the performances of the hard alloys, including thermal conductivity, density, hardness, fracture toughness, flexural strength, and oxidation weight gain, could all meet the requirements of a mold used for manufacturing optical lens. Thermal conductivity is ≥72 W/m·K, density is ≥12 g·cm⁻³, hardness HRA is ≥70, fracture toughness is ≥10 MPa·M^{1/2}, bending resistance ≥1600 N·mm⁻², oxidation weight gain is ≤1.16mg·cm⁻², and the surface roughness Ra of the alloy after polishing is ≤10 nm.

Compared with the alloy in Example 1, the phase content (BCC+FCC) of the alloy formed by hot isostatic press sintering in Example 13 is increased by 0.7%. Therefore, the performances of the alloy, including hardness, fracture toughness, flexural strength, oxidation resistance and the like, are improved.

Compared with the alloy in Example 1, the phase content (BCC+FCC) of the alloy in Example 14 is increased by 0.9% due to the change in the ball-milling process, including increasing the rotating speed and prolonging the ball-milling time to obtain more sufficiently mixed HEA and WC-based hard alloy powders. Therefore, the performances of the alloy, including thermal conductivity, hardness, fracture toughness, flexural strength, oxidation resistance and the like, are improved.

Compared with the alloy in Example 1, the phase content (BCC+FCC) of the alloy in Example 15 is decreased by 0.8% due to the reduction in solid solution effect of HEA by homogenizing the alloy structure through the annealing process. Therefore, the performances of the alloy, including density, hardness, bending resistance and the like, are degraded, but thermal conductivity, fracture toughness and oxidation resistance are improved.

### Example IV

The WC-based hard alloys in Examples 1, 8, 9, 13, and 15 and Comparative Examples 1-4 are each used to form a mold for machining polycarbonate optical glass. The surface of the mold is coated, and the coated mold is used to cast an optical lens. The optical lens is placed 3 cm below a square hole in front of a light source, and slightly tilted for testing. 20 w fluorescent lamp or 100 w lamp bulb is used as the light source, and around setting, including front side, upward side, downward side, left side and right side, is required to be black and non-reflective objects. A magnifying glass (4 X) is used to check scars of #60, or below #60.

The optical lenses formed by the molds of the WC-based hard alloys in Examples 1, 8, 9, 13, and 15 have good appearance, and are qualified products.

The optical lenses formed by the molds of those in Comparative Examples 1-4 have poor appearance, and are unqualified products.

The examples described herein are only for illustrating the present invention, and not intended to limit the present invention. It should be understood that any simple modification, equivalent change and modifications can be made without departing from the concept of the present invention, and all fall within the protection scope of the present invention.

## Claims

1. A WC-based hard alloy, **characterized in that** a molecular formula of the WC-based hard alloy is T-WC-HEA, wherein T is at least one of a carbide, an oxide, or a boride; HEA is a high-entropy alloy, and HEA comprises at least five elements selected from the group consisting of Al, Cu, Nb, Ti, Zr, Ge, Si, V, Ta, Cr, Mn, Ce, Mo, W, and Hf; T comprises element B; in the WC-based hard alloy, a content of HEA is 0.5 wt%-5 wt%, a content of T is 35 wt% or less, and the balance is WC and inevitable impurities; a content of B is 0.1 wt%-3 wt%; and an atomic ratio of each element in HEA is 0.33-1 as measured by an energy dispersive spectrometer.

2. The WC-based hard alloy according to claim 1, **characterized in that** T is at least two selected from the group consisting of Al₄C₃, HfC, TiC, Cr₃C₂, VC, ZrC, NbC, TaC, SiC, Mn₃C, MoC, CuC, Mg₂C₃, W₂C, CeO₂, La₂O₃, MgO, ZrO₂, Al₂O₃, ZrB₂, CrB₂, TiB₂, and MnB₂; and B is present in the form of a transition metal boride.

3. The WC-based hard alloy according to claim 1, **characterized in that** the atomic ratio of each element in HEA is 0.5-1 as measured by the energy dispersive spectrometer; and a maximum difference between atomic radii of elements in HEA is not greater than 0.33.

4. The WC-based hard alloy according to claim 1, **characterized in that** HEA is at least one selected from the group consisting of Al_{0.4}Hf_{0.6}NbTaTiZr, AlMo_{0.5}NbTa_{0.5}TiZr, AlNbTaTiV, AlNb_{1.5}Ta_{0.5}Ti_{1.5}Zr_{0.5}, AlCr₂Mo₂Nb₂Ti₂Zr, HfMoNbTiZr, HfNbTaTiZr, HfNbTiVZr, CrNbTiVZr, CrMo_{0.5}NbTa_{0.5}TiZr, TiZrHfNbCr, TiNbMoTaW, TiVNbMoTaW, HfMoTaTiZr, and HfMoNbTaTiZr.

5. The WC-based hard alloy according to claim 1, **characterized in that** a content of BCC phase solid solution in HEA is 90 % or more.

6. The WC-based hard alloy according to claim 1, **characterized in that** in the WC-based hard alloy, a content of B is 1.5 wt%-3 wt%, and the content of HEA is 2.5 wt%-5 wt%.

7. The WC-based hard alloy according to claim 2, **characterized in that** in the WC-based hard alloy, the content of B is 0.1 wt%-1.5 wt%, and the content of HEA is 0.5 wt%-2.5 wt%.

8. The WC-based hard alloy according to claim 1, **characterized in that** the molecular formula of the WC-based hard alloy is ZrC-ZrB₂-WC-AlNb_{1.5}Ta_{0.5}Ti_{1.5}Zr_{0.5}.

9. The WC-based hard alloy according to any one of claims 1-8, **characterized in that** thermal conductivity of the WC-based hard alloy at normal temperature is 72W/m·K or more.

10. A mold used for optical glass, **characterized in that** the material of the mold is the WC-based hard alloy according to any one of claims 1-8, and the material of the optical glass is selected from the group consisting of silicon dioxide, resin material, and zinc selenide; and the resin material is selected from the group consisting of polymethyl methacrylate, polystyrene, polycarbonate, and polydiallyl diglycol carbonate.
